# FASCICULE DE BREVET EUROPEEN

(11) **EP 3 754 956 B1**
(45) Date de publication et mention de la délivrance du brevet: **24.08.2022**
(21) Numéro de dépôt: 20180601.5
(22) Date de dépôt: 17.06.2020
(51) Int. Cl.: H04M 1/663

(54) **MÉTHODE, DISPOSITIF ET PROGRAMME D'ORDINATEUR POUR DÉTERMINER L'USURPATION DE L'IDENTIFIANT DE L'APPELANT**
VERFAHREN, VORRICHTUNG UND RECHNERPROGRAMM ZUM ERKENNEN EINER MANIPULATION DER ANRUFER-ID
METHOD, DEVICE AND COMPUTER PROGRAM FOR DETECTING MANIPULATION OF THE CALLER ID

(30) Priorité: 21.06.2019 FR 1906721
(43) Date de publication de la demande: 23.12.2020
(73) Titulaire: Orange, 92130 Issy-les-Moulineaux (FR)
(72) Inventeur: BOUVET, Bertrand, 92326 CHATILLON CEDEX (FR)

(56) Documents cités:
- US-A1- 2016 366 276

## Description

### 1. Domaine de l'invention

L'invention concerne le domaine des télécommunications et plus particulièrement un procédé permettant le filtrage des communications électroniques non sollicitées telles que les appels téléphoniques.

### 2. Art Antérieur

Les utilisateurs des services de télécommunications (téléphonie, visiophonie, SMS, RCS, messagerie Instantanée, mail,....) reçoivent de plus en plus de communications électroniques non sollicitées avec à la clef de nombreux désagréments (ligne occupée, temps perdu, dérangements, etc.). C'est par exemple le cas lors des campagnes de télémarketing. En réaction, de plus en plus d'utilisateurs débranchent /éteignent le ou les terminaux téléphoniques pour ne plus être importunés par ces appels non souhaités. Tout cela induit une diminution du volume des appels avec pour conséquence une baisse du chiffre d'affaire des opérateurs de télécommunications.

Ces appels non souhaités sont le plus souvent émis par des centres d'appels ou des robots d'appels localisés à l'étranger. Il est donc très difficile de réguler cette activité et d'imposer des bonnes pratiques.

En France, le gouvernement a mis en place le système « Bloctel » (marque déposée par l'Etat français) permettant aux utilisateurs des services de téléphonie fixe et mobile de déclarer sur le site web Internet « Bloctel » (http://www.bloctel.gouv.fr/ en date du 20/5/2019) ou en appelant un numéro de téléphone dédié, le ou les numéros de téléphone pour lesquels l'utilisateur ne souhaite pas recevoir d'appel de type démarche commerciale, les centres d'appels ou robots d'appels devant théoriquement consulter cette base de données pour savoir s'ils sont autorisés ou non à démarcher les prospects, mais dans la pratique bien peu le font. Pour utiliser le service, l'utilisateur doit remplir un formulaire d'inscription et fournir une adresse de messagerie. Il faut ensuite qu'il valide cette inscription en cliquant sur le lien (URL) qui lui a été envoyé par la plate-forme bloctel dans un courriel. Une fois l'inscription faite, l'utilisateur aura la possibilité d'accéder à son espace personnel et d'y déposer d'éventuelles réclamations. A noter que le service n'est pas opérationnel immédiatement et qu'il y a un délai d'activation pouvant aller jusqu'à 30 jours.

Les opérateurs de télécommunications ont également réagi en proposant à leurs clients des services de filtrage des communications électroniques non sollicitées. Un opérateur de télécommunications français propose par exemple de déclarer, via une interface de configuration de leur passerelle Internet (box), les numéros, préfixes ou tranches de numéros pour lesquels les clients ne souhaitent pas recevoir d'appel. Si cette solution est simple et peu coûteuse en terme de réalisation, elle n'est cependant pas optimale puisque l'appel entrant est acheminé jusqu'à la box de l'appelé avant qu'il ne soit potentiellement refusé si le numéro appelant est présent dans la liste des numéros à rejeter.

Un autre opérateur de télécommunications français propose également un service de filtrage des communications électroniques non sollicitées mais utilise quant à lui une plate-forme de service située dans le réseau qui, sous certaines conditions, demande à l'appelant de s'identifier vocalement avant de présenter l'appel à l'appelé avec le message vocal d'identification enregistré. Les conditions de demande d'identification vocale de l'appelant sont par exemple un numéro d'appelant masqué (appel anonyme), un numéro d'appelant non disponible, par exemple lorsque l'appel transite par des réseaux ayant une signalisation incomplète, lorsque certaines informations présentes à l'origine de l'appel sont perdues durant l'établissement de l'appel, ou bien dans le cas où l'identité de l'appelant est certifiée non conforme au plan de numérotation défini par l'autorité de régulation. Un tel procédé ne permet pas un traitement automatique des appels. En effet l'appelé doit consulter le message vocal d'identification de l'appelant avant d'accepter ou non l'appel. Cela implique aussi un délai plus long pour la mise en relation avec le risque que l'appelant ne raccroche avant que l'appelé ait eu le temps de consulter le message vocal. Le service permet également à ses clients de configurer via un portail web une liste de 20 numéros (liste noire). Si le numéro appelant est présent dans cette liste alors il n'est pas acheminé vers l'appelé. Un message vocal indiquant le refus de l'appel par l'appelé est alors restitué à l'appelant.

Ces services étant pour la plupart basés sur une liste déclarative (liste noire) des numéros à filtrer, leur efficacité n'est par conséquent pas optimale puisque les centres d'appels changent régulièrement de numéro d'appelant. Cela se traduit par une liste noire en constante évolution, jamais à jour, et des appels entrants toujours difficiles à filtrer/rejeter.

D'un point de vue technique, les centres d'appels ou robots d'appels ont la possibilité de changer très facilement leurs numéros d'appels grâce notamment aux réseaux numériques de bout en bout. En effet, contrairement à la technologie RTC (Réseau Téléphonique Commuté) qui ne permet pas de présenter à l'appelé un numéro autre que celui attribué à la ligne téléphonique physique de l'appelant, les technologies utilisées par les réseaux numériques fournissent la possibilité d'insérer, dans le protocole de signalisation ISUP (ISDN Signalling User Part) et plus particulièrement dans le champ d'information « Generic Number », de nouvelles identités appelantes telles que des numéros virtuels. Le numéro virtuel est ainsi transmis de manière transparente jusqu'au terminal de l'appelé, sans subir le moindre contrôle par le réseau. Le terminal de l'appelé ne pouvant afficher qu'un seul numéro appelant, c'est le numéro virtuel déclaré dans le champ d'information « Generic Number » qui est affiché au niveau du téléphone de l'appelé pour lui permettre de rappeler directement son correspondant sans avoir à passer par exemple par le standard d'une entreprise dont le numéro correspond généralement au numéro de la ligne téléphonique physique. Cette logique est également respectée par les services de téléphonie de type VoIP (Voice over IP) qui utilisent par exemple le protocole SIP (Session Initiation Protocol). Le numéro associé à la ligne téléphonique physique est véhiculé dans le champ d'un entête SIP PAI (Private-Asserted-Id) alors que le numéro associé à la ligne virtuelle est véhiculé dans l'entête SIP FROM. Dans le cas où le terminal appelé est un terminal SIP, c'est toujours l'identité véhiculée dans l'entête SIP FROM qui est affichée.

Il est devenu ainsi très facile pour des personnes malintentionnées d'usurper l'identité d'un tiers en venant déclarer son numéro dans l'entête SIP FROM. C'est par exemple le cas de certains centres d'appels ou robots d'appels malveillants qui vont utiliser un numéro de téléphone « voisin » du numéro de l'appelé (par exemple utilisant le même préfixe) pour donner un peu plus confiance à l'appelé. La personne dont le numéro a été utilisé frauduleusement en tant que numéro appelant se retrouve alors confrontée à de graves désagréments tels que de nombreux appels de la part des personnes ayant été démarchées par le centre d'appels ou robots d'appels voire des plaintes. En outre, il est à noter que certains opérateurs de télécommunications fournissent à leurs clients résidentiels et professionnels, des services permettant de modifier le numéro appelant présenté à l'appelé.

Le document de l'art antérieur US 2016/366276 A1 divulgue déjà un procédé de filtrage de communications sous le contrôle de l'appelé, via la mise en œuvre de liste(s) noire(s) et/ ou blanche(s) sur le terminal appelé ou sur la passerelle domestique de l'appelé. Ainsi, ce document divulgue une étape de comparaison (E400) entre l'identifiant contenu dans le champ PAI (identifiant certifié) et l'identifiant contenu dans le champ FROM (identifiant non-certifié) récupéré dans le message de signalisation d'appel Ml. Si l'identifiant certifié est différent de l'identifiant non-certifié (réponse positive dans le processus E400), alors le processus compare l'identifiant certifié avec les identifiants certifiés listés dans la liste noire L.

Les réseaux de télécommunications évoluant naturellement vers une offre basée sur la technologie VoIP (Voice over IP), avec le déploiement significatif de la VoLTE/VoWiFi (Voice over LTE / Voice over WiFi) sur réseau mobile 4G et bientôt la 5G, cette problématique risque de s'amplifier avec le temps. Ce même constat peut également s'appliquer aux services utilisant les technologies SMSoIP (Short Message Service over Internet Protocol), d'IM (Instant Messaging) tel que RCS (Rich Communication Suite) ou encore les agents logiciels automatiques ou semi-automatique (robots ou bots) en mode A2P (Application To Person).

### 3. Exposé de l'invention

L'invention vient améliorer l'état de la technique et propose un procédé permettant pour tout type de service de communication électronique au travers d'un réseau de communication (téléphonie, Visiophonie, RCS, Instant Messaging,...) et tout type d'identifiant de déterminer si l'identifiant transmis par un terminal appelant à un terminal appelé n'a pas été usurpé.

Elle propose à cet effet un procédé de détermination d'une usurpation d'au moins un identifiant non-certifié, ledit au moins un identifiant non-certifié étant destiné à l'utilisation d'un moyen de communication, durant une communication entre un premier et au moins un second terminal, ledit procédé étant mis en œuvre par un dispositif de détermination d'une usurpation d'au moins un identifiant non-certifié; le procédé comprend :
- une étape de réception d'un message de signalisation de la communication en provenance dudit premier terminal et à destination dudit au moins un second terminal comprenant ledit au moins un identifiant non-certifié et au moins une première donnée de certification,
- une étape d'obtention d'au moins une deuxième donnée de certification en fonction dudit au moins un identifiant reçu,
- une étape de comparaison de ladite au moins une première donnée de certification avec ladite au moins une deuxième donnée de certification,
- une étape de transmission, en fonction du résultat de la comparaison, d'au moins ledit message vers ledit au moins un second terminal.

Avantageusement, selon l'invention, l'utilisateur appelé aura la certitude que l'identifiant restitué sur son terminal grâce par exemple à une vocalisation ou un affichage, sera bien celui de l'appelant. L'utilisateur appelé pourra alors décider, par exemple dans le cas d'un appel téléphonique, de prendre ou non l'appel. L'invention se distingue également de l'art antérieur par le fait que le traitement des identifiants peut être automatisé et ne nécessiter aucune intervention de la part de l'utilisateur. Le procédé peut par exemple être situé sur un serveur d'un opérateur participant à la communication et les données de certifications être fournies par les différents opérateurs. En outre, le procédé offre l'avantage d'utiliser le contenu de champs d'information déjà existants du protocole de signalisation en tant que données certifiées. Aucune évolution de la signalisation d'appel et des équipements associés n'est ainsi nécessaire. Le procédé permet aussi d'adresser l'ensemble des terminaux de l'appelé engagés dans la communication. En effet, l'appelé peut souhaiter recevoir les appels sur plusieurs terminaux en simultané.

On entend par opérateur toutes les parties prenantes permettant d'acheminer une communication depuis un utilisateur appelant vers un utilisateur appelé.

On entend par identifiant une suite de caractères qui sert à identifier un objet, comme par exemple un téléphone, ou un utilisateur lors d'une communication. L'identifiant peut être par exemple une adresse de messagerie, une adresse IP, un numéro de téléphone ou encore un numéro d'un papier d'identité.

On entend par usurpation d'un identifiant le fait qu'un premier utilisateur se soit approprié indûment l'identifiant d'un autre utilisateur lui permettant ainsi de se faire passer pour cet autre utilisateur lors d'une communication.

Selon un mode de mise en œuvre particulier de l'invention, l'étape de transmission comprend en outre la transmission d'un message d'erreur vers ledit premier terminal.

Ce mode de mise en œuvre de l'invention permet par exemple de notifier l'appelant lorsque le procédé considère qu'il y a eu usurpation de l'identifiant utilisé lors de la communication. Ce mode de mise en œuvre permet également de notifier l'appelant lorsque l'étape d'obtention n'a pas permis de récupérer les données de certification associées à l'identifiant utilisé lors de la communication. La notification peut par exemple être restituée à l'appelant sous forme d'un message audio, d'un message vidéo, d'un message textuel ou de vibrations.

Selon un mode de mise en œuvre particulier de l'invention, l'étape de transmission comprend en outre la transmission d'un message d'erreur vers ledit au moins un second terminal.

Ce mode de mise en œuvre permet par exemple de notifier l'appelé lorsque l'étape d'obtention n'a pas permis de récupérer les données de certification associées à l'identifiant utilisé lors de la communication. L'appelé sera alors notifié que la communication en cours n'a pas été ou n'est plus certifiée. La notification peut par exemple être restituée à l'appelé sous forme d'un message audio, d'un message vidéo, d'un message textuel ou de vibrations.

Selon un mode de mise en œuvre particulier de l'invention, ledit au moins un identifiant non-certifié correspond à un numéro de téléphone dudit premier terminal.

Ce mode de mise en œuvre de l'invention permet au destinataire d'une communication téléphonique d'être sûr que le numéro de téléphone restitué sur son terminal par exemple de téléphonie ou de visiophonie est bien celui de l'appelant.

Selon un mode de mise en œuvre particulier de l'invention, ledit au moins un identifiant non-certifié correspond à une adresse de messagerie utilisée par ledit premier terminal.

Ce mode de mise en œuvre de l'invention permet au destinataire d'une communication d'être sûr que l'adresse de messagerie restituée sur son terminal, comme par exemple un ordinateur ou une tablette, est bien celle de l'appelant.

Selon un mode de mise en œuvre particulier de l'invention, ladite deuxième donnée de certification est obtenue à partir d'une base de données. De cette façon, la base de données pouvant être mise à jour régulièrement, les données de certification utilisées par le procédé pour déterminer l'usurpation d'un identifiant peuvent être modifiées jusqu'à ce que le procédé soit exécuté. Cela permet ainsi d'avoir des données de certification à jour et un résultat de comparaison le plus pertinent possible. A noter que la base de données peut être de tous types et être ou non hébergée sur le dispositif.

Selon une variante de ce mode particulier de réalisation de l'invention, ladite deuxième donnée de certification est transmise à ladite base de données via une interface dédiée. Ce mode de mise en œuvre de l'invention permet par exemple aux ayants droits d'un identifiant ou à leurs mandataires de venir renseigner la base de données avec les données de certification. Dans le cas d'un numéro de téléphone, cela peut être l'opérateur pour le compte d'un client ou le client lui-même. De cette façon les données de certification permettant la comparaison sont considérées comme authentiques et certifiées. A noter que l'interface dédiée permettant la transmission des données de certification à la base de données peut être située sur la même machine/serveur que la base de données ou sur une machine distante.

Selon un mode de mise en œuvre particulier de l'invention, la réception d'un message de signalisation de demande d'établissement de la communication déclenche l'étape d'obtention de ladite au moins une deuxième donnée de certification. Ce mode de mise en œuvre de l'invention permet à l'utilisateur d'être sûr que la communication est certifiée dès son établissement et que l'identifiant restitué sur son terminal est bien celui de l'appelant.

Selon un mode de mise en œuvre particulier de l'invention, la réception de chaque message de signalisation de la communication déclenche l'étape d'obtention de ladite au moins une deuxième donnée de certification. Ce mode de mise en œuvre de l'invention permet de s'assurer que la communication reste certifiée dans sa globalité. L'utilisateur a ainsi la certitude qu'aucune manipulation sur l'identité de l'appelant n'est possible durant celle-ci.

Selon une variante de ce mode particulier de réalisation, la réception de chaque message de signalisation de la communication permettant d'envoyer audit second terminal des contenus multimédia déclenche l'étape d'obtention de ladite au moins une deuxième donnée de certification. Ce mode de mise en œuvre de l'invention permet de s'assurer que les contenus envoyés lors d'une communication sont bien envoyés par l'appelant et pas par un tiers. Grâce à cette mise en œuvre, la transmission du ou des contenus est alors certifiée comme provenant de l'appelant.

Selon un mode de mise en œuvre particulier de l'invention, le résultat d'une comparaison dudit au moins un identifiant non-certifié avec ladite au moins une première donnée de certification déclenche l'étape d'obtention de ladite au moins une deuxième donnée de certification. Ce mode de mise en œuvre de l'invention permet de diminuer le nombre de requêtes à destination de l'espace de stockage numérique tel qu'une base de données et par conséquent sa charge. L'invention concerne également un dispositif de détermination d'une usurpation d'au moins un identifiant non-certifié, ledit au moins un identifiant non-certifié étant destiné à l'utilisation d'un moyen de communication, durant une communication sur ledit moyen de communication entre un premier et au moins un second terminal, le dispositif comprend :
- un module de communication permettant de recevoir et / ou transmettre un message de signalisation de la communication en provenance dudit premier terminal et à destination dudit au moins un second terminal, ledit message comprenant ledit au moins un identifiant non-certifié et au moins une première donnée de certification,
- un module d'obtention permettant d'obtenir au moins une deuxième donnée de certification associée audit au moins un identifiant non-certifié,
- un module de comparaison de ladite au moins une première donnée de certification avec ladite au moins une deuxième donnée de certification,
de manière à ce que, l'établissement d'un résultat positif par le module de comparaison déclenche la transmission dudit message de signalisation par le module de communication.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un système comportant le dispositif de détermination d'usurpation d'au moins un identifiant non-certifié tel que décrit ci-dessus.

Selon une variante de ce mode particulier de réalisation de l'invention, le système tel que décrit ci-dessus comprend en outre des moyens pour renseigner via une interface homme-machine ladite au moins une deuxième donnée de certification dans ledit dispositif de stockage. Ce mode de mise en œuvre de l'invention permet par exemple à l'opérateur de télécommunications ayant attribué un identifiant à un client ou au client lui-même, de venir renseigner les données de certification associées à cet identifiant mais aussi d'ajouter/modifier/supprimer une durée de validité liée aux données de certification renseignées.

L'invention concerne également un serveur ou une passerelle ou un terminal comportant le dispositif de détermination d'une usurpation d'au moins un identifiant non-certifié tel que décrit ci-dessus.

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un exemple particulier un support d'enregistrement ou support d'informations lisible par un ordinateur, comporte des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de détermination d'une usurpation d'au moins un identifiant non-certifié et ce programme d'ordinateur présentent des caractéristiques et avantages analogues à ceux décrits précédemment en relation avec le procédé de détermination d'une usurpation d'au moins un identifiant non-certifié.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en œuvre selon un mode particulier de réalisation de l'invention,
[Fig 2] La figure 2 illustre l'architecture d'un dispositif mettant en œuvre l'invention selon un mode particulier de réalisation,
[Fig 3] La figure 3 illustre des étapes du procédé de détermination d'une usurpation d'au moins un identifiant selon un mode particulier de réalisation de l'invention,
[Fig 4] La figure 4 illustre des étapes du procédé de détermination d'une usurpation d'au moins un identifiant selon un second mode particulier de réalisation de l'invention.

### 5. Description d'un mode de réalisation de l'invention

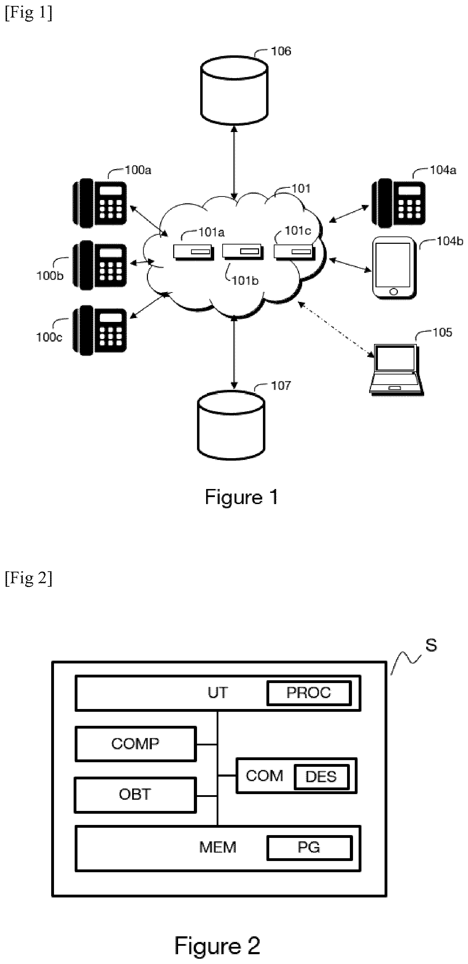

La figure 1 illustre un exemple d'environnement de mise en œuvre de l'invention selon un mode particulier de réalisation. L'environnement représenté en figure 1 comprend un réseau de communication 101 auquel sont connectés des terminaux 100a, 100b, 100c, 104a et 104b. Le réseau de communication 101 peut être un réseau de communications mobile avec réseau d'accès de type GSM, EDGE, 3G, 3G+, 4G, 5G, WiFi... ou un réseau de communication fixe avec réseau d'accès de type ADSL, Fibre, VDSL, WiFi, .... Il peut mettre en œuvre une architecture de type RCS. Le réseau de communication 101 peut aussi être un réseau de communication IP mis en œuvre par une architecture de réseau VoIP (pour Voice over IP) de type IMS (IP Multimedia Subsystem) ou tout autre architecture de réseau. Dans l'exemple décrit ici, le réseau de communication 101 est un réseau IMS, avec un service téléphonique VoIP fixe et est par exemple représentatif de l'architecture réseau de bout en bout dans le cas d'un appel émis depuis un centre d'appels localisé à l'étranger par l'intermédiaire d'un réseau de transit. Le réseau de communication 101 correspond par conséquent à un groupe de réseaux de communication d'opérateurs de télécommunications différents, interconnectés entre eux par l'intermédiaire de serveurs d'interconnexion. Les serveurs 101a, 101b et 101c, représentent respectivement les serveurs du réseau IMS de l'opérateur de télécommunications de l'appelant, de transit et de l'appelé permettant l'acheminement d'une communication entre par exemple le terminal 100a et le terminal 104a.

Le cœur IMS (non représenté) de chaque réseau est par exemple constitué d'un serveur de point d'entrée P-CSCF (Proxy Call State Control Function) relié aux terminaux (par exemple 100a) par l'intermédiaire d'un IPBX (Internet protocol Private Branch Exchange), interconnecté en SIP avec le serveur S-CSCF (Serving Call State Control Function), lui-même interconnecté avec une base de données HSS (Home Subscriber Server) via une interface Cx standardisée utilisant le protocole Diameter, et en SIP avec le serveur d'application TAS (Telephony Application Server) via une interface standardisée ISC (IP Multimedia Service Control) qui a en charge l'exécution des services dits « Originating » tels que les services OIR (Originating Identification Restriction), Call Barring, etc. Le serveur applicatif TAS est également connecté à un serveur média MRF (Media Resource Function) permettant de jouer dans certains cas d'usages à l'appelant des annonces vocales/visio comme par exemple lors d'une erreur de numérotation. Le serveur S-CSCF est aussi interconnecté avec le serveur DNS ENUM (Electronic NUMbering) via le protocole DNS (Domain Name Server) permettant le routage d'un appel vers le destinataire. Si par exemple le numéro du destinataire est présent dans la base de données ENUM, cela signifie que le destinataire et le centre d'appels ont le même opérateur de télécommunications. Dans le cas contraire, cela signifie que le destinataire est client d'un autre opérateur de télécommunications ou d'un autre type de réseau du même opérateur de télécommunications et auquel cas la fonction BGCF (Breakout Gateway Control Function) interne au S-CSCF va permettre de rediriger la demande d'appel vers un réseau externe en s'appuyant par exemple sur une table de routage basée sur des préfixes téléphoniques ou toute autre information présente dans la signalisation d'appel. La demande d'appel passe ensuite via une interface SIP par un serveur IBCF (Interconnection Border Control Function) qui va transmettre la demande d'appel vers son pendant au niveau du réseau d'un autre opérateur.

Les terminaux 100a, 100b, 100c, 104a et 104b peuvent être tous types de terminaux permettant d'établir des sessions de communication de type téléphonique, visiophonique, messagerie instantanée, SMSoIP, etc. Les terminaux 100a, 100b, 100c, 104a et 104b correspondent par exemple à un téléphone portable, un téléphone fixe, un smartphone (téléphone intelligent en anglais), une tablette, une télévision connectée à un réseau de communication, un objet connecté, une voiture autonome, ou un ordinateur personnel.

Les terminaux 100a, 100b, 100c, 104a et 104b peuvent émettre et recevoir tous types de communications, via le réseau de communication 101. Les terminaux 100a, 100b et 100c sont par exemples des terminaux utilisés par les téléprospecteurs ou les télévendeurs d'un centre d'appels situé à l'étranger. Les terminaux 104a et 104b sont par exemple les terminaux des prospects sollicités par les téléprospecteurs ou les télévendeurs. L'environnement représenté en figure 1 comprend également deux espaces de stockage numérique, 106 et 107. L'élément 106 est par exemple une base de données permettant de gérer la portabilité des numéros de téléphone, dans le pays où se trouve l'appelé. La portabilité du numéro permet de changer d'opérateur tout en conservant le même numéro de téléphone. L'espace de stockage numérique 107 permet le stockage d'un identifiant de l'appelant associé à au moins une donnée de certification. Il peut se situer dans le réseau de l'opérateur de télécommunications de l'appelant, de transit ou encore de l'appelé. L'identifiant de l'appelant peut par exemple être le contenu de l'entête SIP FROM compris dans un message de signalisation SIP. A noter que le contenu du champ SIP FROM est déclaratif et que c'est ce contenu qui est restitué sur le terminal de l'appelé. Ce n'est donc pas une donnée certifiée par un tiers comme par exemple un opérateur de télécommunications ou une autorité de régulation.

Selon un mode particulier de réalisation de l'invention, l'espace de stockage numérique correspond à une basse de données.

Selon un mode particulier de réalisation de l'invention, l'identifiant de l'appelant correspond à son numéro de téléphone.

Selon un mode particulier de réalisation de l'invention, l'identifiant de l'appelant correspond à son adresse de messagerie.

Les données de certification stockées dans l'espace de stockage numérique et associées à l'identifiant de l'appelant peuvent être par exemple :
- une donnée de type SIP PAI (Session-Initiation-Protocol P-Asserted-Id, standardisé par l'IETF RFC3455) avec la possibilité d'avoir 2 contenus simultanés, l'un au format SIP URI (Session-Initiation-Protocol Uniform-Resource-Identifier) et l'autre au format TEL URI (TEL Uniform-Resource-Identifier),
- une donnée de type SIP PANI (Session-Initiation-Protocol Private-Access-Network-Identifier standardisée par l'IETF RFC3455/RFC7913),
- une donnée de type SIP PVNI (Session-Initiation-Protocol P-Visited-Network-Identifier), champ dont la structure est standardisée par l'IETF (RFC3455),
- une donnée de type SIP portant des noms de domaine ou adresse IP tels que les entêtes SIP FROM, TO, RURI, VIA, CONTACT,
- une donnée en lien avec des paramètres SDP compris dans les messages SIP comme par exemple le paramètre « c » (Connexion), ou bien
- une donnée de type IMEI (International Mobile Equipment Identifier) pour les équipements/terminaux mobiles.

Dans le cas où le réseau 101 est un réseau utilisant une technologie de type circuit (non représenté) comme par exemple le réseau mobile 2G/3G, l'identifiant de l'appelant peut correspondre au contenu de l'élément d'information Generic Number s'il est présent dans la demande d'établissement de la communication ou bien au contenu de l'élément d'information Calling Party Number. Les données de certification peuvent alors correspondre au contenu de l'élément d'information Calling Party Number qui porte l'identifiant de la ligne téléphonique physique, au contenu du champ Location Number présent dans la signalisation d'appel, au contenu de l'élément d'information IMSI (International Mobile Subscriber Identity) de la carte/composant physique SIM/eSIM du terminal/dispositif de l'appelant ou bien au contenu de l'IMEI (International Mobile Equipement Identifier) pour les équipements/terminaux mobiles.

Selon un mode particulier de réalisation de l'invention, l'environnement inclut aussi un terminal 105 comme par exemple un téléphone portable, une tablette ou un ordinateur personnel apte à communiquer avec l'espace de stockage numérique 107 au travers d'un réseau de communication comme par exemple au travers du réseau de communication 101. La communication peut par exemple se faire grâce à une connexion sécurisée associée à un compte utilisateur. Cela permet par exemple à l'opérateur de télécommunications fournisseur de services de venir renseigner l'espace de stockage numérique avec les identifiants de ses clients et une ou plusieurs données de certification associées. Le client attributaire de l'identifiant peut également, selon le service et/ou son opérateur de télécommunications/fournisseur de services, renseigner une ou plusieurs données de certification permettant par exemple le bon usage de son identifiant par un tiers, tel qu'un centre d'appel. Cela lui permet aussi, s'il possède plusieurs identifiants, de gérer les données de certification associées à chaque identifiant et/ou terminal en sa possession.

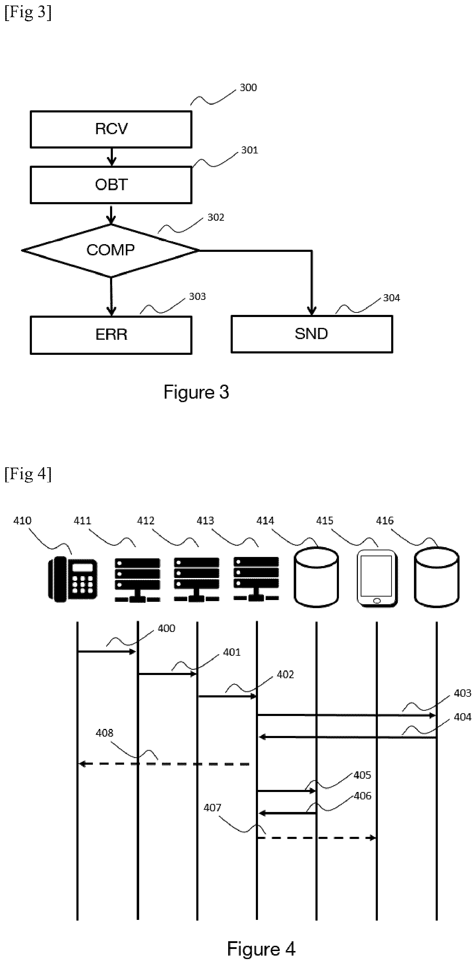

La figure 2 illustre un dispositif S mettant en œuvre l'invention selon un mode particulier de réalisation. Le dispositif S a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de détermination d'une usurpation d'au moins un identifiant tel que décrit ultérieurement à l'appui des figures 3 et 4, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de détermination d'une usurpation d'au moins un identifiant selon l'un quelconque des modes particuliers de réalisation décrits en relation avec les figures 3 et 4, selon les instructions du programme d'ordinateur PG.

Le dispositif S comprend un module de communication COM configuré pour établir des communications avec un réseau IP selon une technologie par exemple de Type Ethernet ou Wi-Fi. Ce module de communication est utilisé pour recevoir un message de signalisation d'une communication en provenance d'un premier terminal et émettre, en fonction du résultat de l'étape de comparaison, un message de signalisation à destination d'un ou plusieurs terminaux.

Le dispositif S comprend également un module OBT adapté pour obtenir une donnée de certification liée à un identifiant de l'appelant reçu dans le message de signalisation. L'obtention de cette donnée de certification peut par exemple se faire depuis un espace de stockage numérique tel qu'une base de données. La base de données peut être de tous types comme par exemple MySQL, Oracle, MongoDB, mais aussi sous forme d'un ou plusieurs fichiers.

Le dispositif S comprend également un module COMP adapté pour comparer une donnée de certification reçue dans le message de signalisation avec une donnée de certification obtenue en fonction de l'identifiant de l'appelant depuis l'espace de stockage numérique.

Le dispositif S comprend également un module DES adapté pour décider, en fonction du résultat de la comparaison, du type de message à envoyer et le destinataire. Si la comparaison indique par exemple que l'identifiant reçu dans le message de signalisation et provenant de l'appelant comprend une donnée de certification obtenue depuis l'espace de stockage, la donnée de certification étant associée à l'identifiant, alors le message de signalisation est transmis vers l'appelé. Si par contre la comparaison indique le contraire, alors un message d'erreur peut être envoyé à l'appelant. D'autres types de messages ou comportements sont bien évidemment possibles en fonction du service. Un message électronique (SMS, courriel, etc.) peut par exemple être envoyé à l'appelant le notifiant que le message de signalisation n'a pas abouti et qu'il y a une suspicion d'usurpation d'identité. Un autre comportement peut consister à transmettre le message de signalisation à l'appelé mais en anonymisant l'identité de l'appelant ou bien d'ajouter une information à l'identifiant de l'appelant, comme par exemple un préfixe ou un suffixe prédéterminé, permettant d'informer l'appelé qu'il y a une suspicion d'usurpation de l'identité de l'appelant.

Dans cet exemple le module DES est un sous module du module COM mais d'autres architectures techniques sont également possibles. Le module DES peut par exemple être indépendant du module COM.

Selon un mode particulier de réalisation de l'invention, le dispositif S peut comprendre un module de stockage (non représenté) dans lequel sont stockés les identifiants des appelants et les données de certification associées.

Selon un mode particulier de réalisation de l'invention, le dispositif S est compris dans un serveur, tel que par exemple l'un des serveurs des réseaux 101a, 101b ou 101c de la figure 1.

Selon un mode particulier de réalisation de l'invention, le dispositif S est compris dans une passerelle internet domestique ADSL ou fibre ou entreprise telle qu'un PBX, un IPBX. A noter que la passerelle peut être partiellement virtualisée et hébergée par exemple sur un serveur situé dans le réseau.

Selon un mode particulier de réalisation de l'invention, le dispositif S est compris dans le terminal de l'appelé.

La figure 3 illustre des étapes du procédé de détermination d'une usurpation d'au moins un identifiant selon un mode particulier de réalisation de l'invention. Le procédé s'exécutant sur le dispositif de détermination d'une usurpation d'au moins un identifiant situé par exemple sur un serveur dans le réseau, sur une passerelle internet telle qu'un routeur ADSL ou fibre, sur un IPBX ou sur le terminal de l'appelé. Lors de la première étape (RCV) le procédé va recevoir d'un premier terminal, un message de signalisation d'une communication. Le procédé va alors récupérer dans le message de signalisation, si le message de signalisation est un message défini comme à traiter par le procédé, l'identifiant de l'appelant et au moins une donnée de certification. Les messages de signalisation à traiter par le procédé peuvent être par exemple des messages SIP INVITE, OPTIONS, INFO ou encore MESSAGE.

Selon un mode particulier de réalisation de l'invention, les messages définis comme à traiter par le procédé sont les messages de signalisation permettant la demande d'établissement de la communication.

Selon un mode particulier de réalisation de l'invention, les messages définis comme à traiter par le procédé sont les messages de signalisation de la communication permettant la découverte des capacités techniques du terminal appelé.

Selon un mode particulier de réalisation de l'invention, les messages définis comme à traiter par le procédé sont les messages de signalisation de la communication permettant d'envoyer directement audit second terminal du texte ou des contenus multimédia tels que des photos ou des vidéos.

Selon un mode particulier de réalisation de l'invention, le message de signalisation peut ne pas comprendre de donnée de certification. Dans ce cas, le procédé passe alors directement et en fonction de la configuration du service, à l'étape 303 ou 304 avec l'envoi d'un message d'erreur à l'appelant et / ou la transmission du message de signalisation vers l'appelé avec l'indication que l'identifiant de l'appelant peut être usurpé.

Selon un mode particulier de réalisation de l'invention, si à l'issue de la première étape, l'identifiant de l'appelant et une donnée de certification présente dans le message de signalisation sont identiques, le procédé peut considérer que le message de signalisation est certifié. Le procédé passe alors directement à l'étape SND. Dans le cas par exemple d'une communication téléphonique SIP, si le contenu du champ SIP PAI qui correspond à l'identifiant de la ligne téléphonique physique (champ renseigné par l'opérateur de télécommunications de l'appelant) est identique au contenu du champ SIP FROM déclaré dans le message de signalisation alors le procédé peut considérer que l'appel est émis depuis la bonne ligne téléphonique et qu'il n'y a pas eu d'usurpation d'identifiant. Le procédé peut également considérer que le message de signalisation est certifié si le champ SIP FROM contient le champ SIP PAI ou inversement. Cela permet par exemple de ne pas tenir compte d'un préfixe ou suffixe ajouté à l'un ou l'autre des deux champs, comme par exemple un nom de domaine.

Dans une deuxième étape (OBT), le procédé va obtenir depuis un espace de stockage numérique, comme par exemple une base de données, une ou plusieurs données de certification associées à l'identifiant de l'appelant récupéré lors de la première étape (RCV). Dans le cas où l'identifiant de l'appelant n'existe pas ou qu'aucune donnée de certification n'est disponible dans l'espace de stockage numérique en lien avec l'identifiant de l'appelant, un message d'erreur peut être envoyé à l'appelant. Il en est de même si l'espace de stockage numérique est temporairement indisponible.

Selon un mode particulier de réalisation de l'invention, le déclenchement de cette étape peut être fonction de la présence d'un préfixe ou d'un suffixe au niveau de l'identifiant de l'appelant. Dans le cas d'un numéro de téléphone, cela permet par exemple au procédé de ne traiter que les numéros nationaux sans préfixe internationaux. Ce mode est particulièrement adapté lorsque l'usage de l'espace de stockage numérique est limité à un cadre national. Dans ce cas-là, si le numéro de l'appelant est un numéro international, le procédé passe alors directement et en fonction de la configuration du service, à l'étape 303 ou 304.

A la troisième étape (COMP) le procédé va comparer les données de certification reçues et obtenues. Si le résultat de la comparaison est positif, le message de signalisation est alors transmis (SND) par le module de communication du dispositif vers l'appelé. Dans le cas contraire un message d'erreur peut être envoyé à l'appelant (ERR). Le résultat de la comparaison peut être considéré comme positif lorsque par exemple le champ SIP FROM ou n'importe quelle donnée certifiée reçue contient une donnée de certification obtenue depuis l'espace de stockage numérique et associée à l'identifiant ou inversement. Cela permet par exemple de ne pas tenir compte d'un préfixe ou suffixe ajouté à une donnée de certification reçue ou obtenue.

La figure 4 illustre des étapes du procédé de détermination d'une usurpation d'au moins un identifiant selon un second mode particulier de réalisation de l'invention et décrit le cas particulier d'une communication SIP en lien avec l'environnement décrit au niveau de la figure 1.

L'établissement d'une communication est par exemple mis en œuvre par le terminal 100a de la figure 1 correspondant par exemple au terminal 410 de la figure 4. Pour émettre un appel (400) depuis un terminal (410) et réaliser sa campagne de télémarketing, le centre d'appels utilise un équipement de type IPBX (Internet protocol Private Branch Exchange) qui est interconnecté avec le réseau VoIP IMS de son opérateur. L'IPBX est enregistré en SIP dans le cœur de réseau IMS de l'opérateur avec au moins une identité publique IMPU (IP Multimedia PUblic Identity) correspondant au numéro/identifiant de la ligne téléphonique physique attribuée au centre d'appels par son opérateur.

La demande de communication (400) est envoyée sous la forme d'un message SIP INVITE selon le protocole SIP. Le message SIP INVITE comprend notamment :
- dans un champ d'adresse émetteur de la demande de communication, appelé « FROM », l'adresse du terminal 410 comprenant une identité publique comme par exemple le numéro de téléphone.
- dans un champ d'adresse destinataire de la demande de communication, appelé « To », l'identité publique du destinataire (415),
- dans un champ d'adresse SIP destinataire, appelé « R-URI » pour Request Uniform Ressource Identifier, l'identité publique du destinataire.

La demande de communication (400) est ensuite prise en charge par l'opérateur du centre d'appels et transite par ses serveurs (411) et son réseau IMS. L'opérateur va alors enrichir le message de signalisation, comme par exemple un message d'établissement de connexion, avec un numéro de téléphone PAI (Private Asserted Identity) correspondant au numéro international de la ligne téléphonique physique du centre d'appels. L'opérateur ajoute également au message, l'information de localisation PANI (Private Access Network Information) correspondant à la localisation du centre d'appels. Les champs PAI et PANI sont par conséquent des données certifiées par l'opérateur.

La demande de communication (401) comprend alors :
- dans un champ d'adresse émetteur de la demande de communication, appelé « FROM », l'adresse du terminal 410 comprenant une identité publique associée au terminal 410 comme par exemple le numéro de téléphone.
- dans un champ d'adresse destinataire de la demande de communication, appelé « To », l'identité publique du destinataire (415),
- dans un champ d'adresse destinataire, appelé « R-URI » pour Request Uniform Ressource Identifier, l'identité publique du destinataire.
- dans un champ d'identité appelante certifiée, appelé « PAI », le numéro de la ligne de l'IPBX de l'appelant
- dans un champ de localisation, appelé « PANI », la localisation du centre d'appels avec l'information CC (Code Country) correspondant à l'identifiant du pays de l'appelant, l'information OC (Operateur Code) correspondant à l'identifiant de l'opérateur de l'appelant et la localisation (LAC pour Location Area Code en anglais) telle que l'identifiant de la ville, le code postal, le quartier ou l'adresse.

Le message est ensuite traité par les serveurs opérés par le réseau de transit (412). Le réseau de transit peut alors consulter, selon le préfixe téléphonique du destinataire et potentiellement le préfixe téléphonique de l'appelant, une base de données (non représentée) de sorte à trouver le réseau destinataire (413) de l'appelé. La demande (402) est alors transmise vers le réseau destinataire (413).

Dans l'exemple décrit ici, le procédé de détermination d'une usurpation d'au moins un identifiant est par exemple mis en œuvre par un dispositif de détermination d'une usurpation d'au moins un identifiant situé sur l'équipement IBCF du réseau IMS de l'opérateur de télécommunications de l'appelé (413) mais pourrait être hébergé sur n'importe quel serveur prenant part à la communication.

Le procédé va ensuite interroger (403), en fournissant comme paramètre l'identifiant contenu dans le champ SIP FROM du message de signalisation reçu, un espace de stockage numérique (416) comme par exemple une base de données dans laquelle sont stockés l'identifiant de l'appelant et les données de certifications associées. Le dispositif reçoit (404) alors les données de certifications comme par exemple une donnée de type PAI (PAI1) dont le contenu contient le numéro/identifiant de la ligne téléphonique physique associée à l'identifiant de l'appelant, une donnée de type PAI (PAI2) dont le contenu contient par exemple le numéro de ligne téléphonique physique de l'IPBX du centre d'appels ou encore une donnée de type PANI dont le contenu contient la localisation certifiée de la ligne utilisée par le centre d'appel. Ces informations ont par exemple été renseignées dans l'espace de stockage numérique par un opérateur de télécommunications ou directement par les clients via par exemple un outil d'administration sécurisé tel qu'un portail web. A noter que ces informations peuvent avoir une durée de validité limitée. Le procédé va ensuite comparer les données reçues. Dans les cas où :
- le contenu du champ PAI1 obtenu depuis l'espace de stockage numérique comprend le contenu du champ SIP PAI ou FROM présent dans le message de signalisation, ou que
- le contenu du champ PAI2 obtenu depuis l'espace de stockage numérique comprend le contenu du champ PAI présent dans le message de signalisation, ou que
- le contenu du champ PANI obtenu depuis l'espace de stockage numérique comprend le contenu du champ PANI présent dans le message de signalisation,

le message SIP est transmis vers le destinataire.

A noter que pour renforcer la qualité, le dispositif peut être configuré afin que l'ensemble des cas de comparaison décrits ci-dessus ou un sous ensemble, soit nécessaire pour que le message SIP puisse être transmis vers le destinataire.

Dans le cas contraire, le module de comparaison considère qu'il s'agit d'une demande de communication avec usurpation d'identifiant et applique un traitement préconfiguré comme par exemple l'envoi d'un message de signalisation à l'appelant (408) avec un code d'erreur du type 403 Forbidden.

Si le champ SIP FROM contient « anonymous » par exemple dans le cas d'un appel masqué, le procédé peut ne réaliser aucun traitement sur le message de signalisation et le transmettre vers le terminal de l'appelé. Alternativement, le procédé peut également considérer que l'appelant doit être identifiable avant de transmettre le message de signalisation. Le procédé transmet alors un message de signalisation avec un message d'erreur à l'appelant comme par exemple un message du type 403 Forbidden. Alternativement, le procédé peut interroger l'espace de stockage numérique (416) en fournissant comme identifiant le contenu du champ SIP PAI du message de signalisation reçu et comparer le contenu des données certifiées obtenues avec celles reçues et présentes dans les champs du message SIP. Si au moins l'une des données obtenues comprend l'une des données reçues alors le message de signalisation SIP est transmis vers le destinataire.

Dans le cas où l'identifiant reçu dans le message SIP n'existe pas dans l'espace de stockage numérique, le procédé transmet un message de signalisation avec un code d'erreur à l'appelant comme par exemple un message SIP 404 Not Found.

Le serveur IBCF du réseau de l'opérateur de télécommunications de l'appelé consulte ensuite (405) la base de données de portabilité des numéros (414), base de données partagée par l'ensemble des opérateurs de télécommunications opérant dans un pays, en fournissant le numéro de l'appelé contenu dans le champ SIP TO ou RURI du message de signalisation. En retour (406), la base de données de portabilité fournit soit le même numéro, si celui-ci n'est pas porté chez un autre opérateur de télécommunications, dans ce cas l'opérateur de l'appelé est déterminé via le préfixe du numéro, soit le même numéro auquel est ajouté un préfixe supplémentaire qui détermine l'adresse de l'équipement réseau de l'opérateur de télécommunications de l'appelé. Le message de signalisation est ensuite transmis (407) au terminal de l'appelé (415).

A noter que la consultation de la base de données de portabilité pourrait être consultée avant la consultation de la base de données de l'espace numérique.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre des revendications.

## Revendications

1. Procédé de détermination d'une usurpation d'au moins un identifiant non-certifié, ledit au moins un identifiant non-certifié étant destiné à l'utilisation d'un moyen de communication, durant une communication entre un premier et au moins un second terminal, ledit procédé étant mis en œuvre par un dispositif de détermination d'une usurpation d'au moins un identifiant non-certifié, le procédé comprend :
- une étape de réception (300) d'un message de signalisation de la communication en provenance dudit premier terminal et à destination dudit au moins un second terminal comprenant ledit au moins un identifiant non-certifié et au moins une première donnée de certification,
- une étape d'obtention (301) d'au moins une deuxième donnée de certification en fonction dudit au moins un identifiant non-certifié reçu,
- une étape de comparaison (302) de ladite au moins une première donnée de certification avec ladite au moins une deuxième donnée de certification,
- une étape de transmission, en fonction du résultat de la comparaison, d'au moins ledit message vers ledit au moins un second terminal.

2. Procédé selon la revendication 1 dans lequel l'étape de transmission comprend en outre la transmission d'un message d'erreur vers ledit premier terminal.

3. Procédé selon la revendication 1 dans lequel ledit au moins un identifiant non-certifié correspond à un numéro de téléphone dudit premier terminal.

4. Procédé selon la revendication 1 dans lequel ledit au moins un identifiant non-certifié correspond à une adresse de messagerie utilisée par ledit premier terminal.

5. Procédé selon la revendication 1 dans lequel ladite deuxième donnée de certification est obtenue à partir d'une base de données.

6. Procédé selon la revendication 5 dans lequel ladite deuxième donnée de certification est transmise à ladite base de données via une interface dédiée.

7. Procédé selon l'une quelconque des revendications 1 à 5 dans lequel la réception d'un message de signalisation de demande d'établissement de la communication déclenche l'étape d'obtention de ladite au moins une deuxième donnée de certification.

8. Procédé selon l'une quelconque des revendications 1 à 5 dans lequel la réception de chaque message de signalisation de la communication déclenche l'étape d'obtention de ladite au moins une deuxième donnée de certification.

9. Procédé selon la revendication 8 dans lequel la réception de chaque message de signalisation de la communication permettant d'envoyer audit second terminal des contenus multimédia déclenche l'étape d'obtention de ladite au moins une deuxième donnée de certification.

10. Procédé selon l'une quelconque des revendications 1 à 5 dans lequel le résultat d'une comparaison dudit au moins un identifiant non-certifié avec ladite au moins une première donnée de certification déclenche l'obtention de ladite au moins une deuxième donnée de certification.

11. Dispositif de détermination d'une usurpation d'au moins un identifiant non-certifié, ledit au moins un identifiant non-certifié étant destiné à l'utilisation d'un moyen de communication, durant une communication sur ledit moyen de communication entre un premier et au moins un second terminal, le dispositif comprend :
- un module de communication (COM) permettant de recevoir et / ou transmettre un message de signalisation de la communication en provenance dudit premier terminal et à destination dudit au moins un second terminal, ledit message comprenant ledit au moins un identifiant non-certifié et au moins une première donnée de certification,
- un module d'obtention (OBT) permettant d'obtenir au moins une deuxième donnée de certification associée audit au moins un identifiant non-certifié,
- un module de comparaison (COMP) de ladite au moins une première donnée de certification avec ladite au moins une deuxième donnée de certification, de manière à ce que, l'établissement d'un résultat positif par le module de comparaison déclenche la transmission dudit message de signalisation par le module de communication.

12. Système comportant un dispositif de détermination d'usurpation d'au moins un identifiant non-certifié selon la revendication 11 et un dispositif de stockage comprenant des moyens pour stocker ledit au moins un identifiant non-certifié et ladite au moins une deuxième donnée de certification associée audit au moins un identifiant non-certifié.

13. Système selon la revendication 12 comprenant en outre des moyens pour renseigner via une interface homme-machine ladite au moins une deuxième donnée de certification dans ledit dispositif de stockage.

14. Serveur comportant un dispositif de détermination d'usurpation d'au moins un identifiant non-certifié selon la revendication 11.

15. Passerelle comportant un dispositif de détermination d'usurpation d'au moins un identifiant non-certifié selon la revendication 11.

16. Terminal comportant un dispositif de détermination d'usurpation d'au moins un identifiant non-certifié selon la revendication 11.

17. Programme d'ordinateur comportant des instructions pour la mise en œuvre du procédé selon l'une quelconque des revendications 1 à 10, lorsque le programme est exécuté par un processeur.

## Patentansprüche

1. Verfahren zur Bestimmung eines Missbrauchs mindestens einer unzertifizierten Kennung, wobei die mindestens eine unzertifizierte Kennung zur Benutzung einer Kommunikationseinrichtung während einer Kommunikation zwischen einem ersten und mindestens einem zweiten Endgerät bestimmt ist, wobei das Verfahren von einer Vorrichtung zur Bestimmung eines Missbrauchs mindestens einer unzertifizierten Kennung durchgeführt wird, und das Verfahren enthält
- einen Schritt des Empfangs (300) einer Signalisierungsnachricht der Kommunikation, die vom ersten Endgerät kommt und für das mindestens eine zweite Endgerät bestimmt ist, die die mindestens eine unzertifizierte Kennung und mindestens einen ersten Zertifizierungsdatenwert enthält,
- einen Schritt des Erhalts (301) mindestens eines zweiten Zertifizierungsdatenwerts abhängig von der mindestens einen empfangenen unzertifizierten Kennung,
- einen Schritt des Vergleichs (302) des mindestens einen ersten Zertifizierungsdatenwerts mit dem mindestens einen zweiten Zertifizierungsdatenwert,
- einen Schritt der Übertragung, abhängig vom Ergebnis des Vergleichs, mindestens der Nachricht an das mindestens eine zweite Endgerät.

2. Verfahren nach Anspruch 1, wobei der Übertragungsschritt außerdem die Übertragung einer Fehlernachricht an das erste Endgerät enthält.

3. Verfahren nach Anspruch 1, wobei die mindestens eine unzertifizierte Kennung einer Telefonnummer des ersten Endgeräts entspricht.

4. Verfahren nach Anspruch 1, wobei die mindestens eine unzertifizierte Kennung einer vom ersten Endgerät verwendeten Mail-Adresse entspricht.

5. Verfahren nach Anspruch 1, wobei der zweite Zertifizierungsdatenwert ausgehend von einer Datenbank erhalten wird.

6. Verfahren nach Anspruch 5, wobei der zweite Zertifizierungsdatenwert über eine dedizierte Schnittstelle an die Datenbank übertragen wird.

7. Verfahren nach einem der Ansprüche 1 bis 5, wobei der Empfang einer Signalisierungsnachricht einer Aufbauanforderung der Kommunikation den Schritt des Erhalts des mindestens einen zweiten Zertifizierungsdatenwerts auslöst.

8. Verfahren nach einem der Ansprüche 1 bis 5, wobei der Empfang jeder Signalisierungsnachricht der Kommunikation den Schritt des Erhalts des mindestens einen zweiten Zertifizierungsdatenwerts auslöst.

9. Verfahren nach Anspruch 8, wobei der Empfang jeder Signalisierungsnachricht der Kommunikation, die es ermöglicht, Multimedia-Inhalte an das zweite Endgerät zu schicken, den Schritt des Erhalts des mindestens einen zweiten Zertifizierungsdatenwerts auslöst.

10. Verfahren nach einem der Ansprüche 1 bis 5, wobei das Ergebnis eines Vergleichs der mindestens einen unzertifizierten Kennung mit dem mindestens einen ersten Zertifizierungsdatenwert den Erhalt des mindestens einen zweiten Zertifizierungsdatenwerts auslöst.

11. Vorrichtung zur Bestimmung eines Missbrauchs mindestens einer unzertifizierten Kennung, wobei die mindestens eine unzertifizierte Kennung zur Verwendung einer Kommunikationseinrichtung während einer Kommunikation auf der Kommunikationseinrichtung zwischen einem ersten und mindestens einem zweiten Endgerät bestimmt ist,
wobei die Vorrichtung enthält:
- ein Kommunikationsmodul (COM), das es ermöglicht, eine Signalisierungsnachricht der Kommunikation vom ersten Endgerät kommend und für das mindestens eine zweite Endgerät bestimmt zu empfangen und/oder zu übertragen, wobei die Nachricht die mindestens eine unzertifizierte Kennung und mindestens einen ersten Zertifizierungsdatenwert enthält,
- ein Erhaltsmodul (OBT), das es ermöglicht, mindestens einen der mindestens einen unzertifizierten Kennung zugeordneten zweiten Zertifizierungsdatenwert zu erhalten,
- ein Vergleichsmodul (COMP) des mindestens einen ersten Zertifizierungsdatenwerts mit dem mindestens einen zweiten Zertifizierungsdatenwert, damit die Erstellung eines positiven Ergebnisses durch das Vergleichsmodul die Übertragung der Signalisierungsnachricht durch das Kommunikationsmodul auslöst.

12. System, das eine Vorrichtung zur Bestimmung eines Missbrauchs mindestens einer unzertifizierten Kennung nach Anspruch 11 und eine Speichervorrichtung aufweist, die Einrichtungen enthält, um die mindestens eine unzertifizierte Kennung und den der mindestens einen unzertifizierten Kennung zugeordneten zweiten Zertifizierungsdatenwert zu speichern.

13. System nach Anspruch 12, das außerdem Einrichtungen enthält, um über eine Mensch-Maschine-Schnittstelle den mindestens einen zweiten Zertifizierungsdatenwert in der Speichervorrichtung anzugeben.

14. Server, der eine Vorrichtung zur Bestimmung eines Missbrauchs mindestens einer unzertifizierten Kennung nach Anspruch 11 aufweist.

15. Gateway, das eine Vorrichtung zur Bestimmung eines Missbrauchs mindestens einer unzertifizierten Kennung nach Anspruch 11 aufweist.

16. Endgerät, das eine Vorrichtung zur Bestimmung eines Missbrauchs mindestens einer unzertifizierten Kennung nach Anspruch 11 aufweist.

17. Computerprogramm, das Anweisungen zur Durchführung des Verfahrens nach einem der Ansprüche 1 bis 10 aufweist, wenn das Programm von einem Prozessor ausgeführt wird.

## Claims

1. Method for determining spoofing of at least one uncertified identifier, said at least one uncertified identifier being intended for the use of a communication means, during communication between a first and at least one second terminal, said method being implemented by a device for determining spoofing of at least one uncertified identifier, the method comprising:
- a step of receiving (300) a signalling message of the communication from said first terminal and intended for said at least one second terminal, comprising said at least one uncertified identifier and at least one first item of certification data,
- a step of obtaining (301) at least one second item of certification data on the basis of said at least one received uncertified identifier,
- a step of comparing (302) said at least one first item of certification data with said at least one second item of certification data,
- a step of transmitting at least said message to said at least one second terminal on the basis of the result of the comparison.

2. Method according to Claim 1, wherein the transmission step furthermore comprises transmitting an error message to said first terminal.

3. Method according to Claim 1, wherein said at least one uncertified identifier corresponds to a telephone number of said first terminal.

4. Method according to Claim 1, wherein said at least one uncertified identifier corresponds to an email address used by said first terminal.

5. Method according to Claim 1, wherein said second item of certification data is obtained from a database.

6. Method according to Claim 5, wherein said second item of certification data is transmitted to said database via a dedicated interface.

7. Method according to any one of Claims 1 to 5, wherein the reception of a signalling message requesting to establish the communication triggers the step of obtaining said at least one second item of certification data.

8. Method according to any one of Claims 1 to 5, wherein the reception of each signalling message of the communication triggers the step of obtaining said at least one second item of certification data.

9. Method according to Claim 8, wherein the reception of each signalling message of the communication for sending multimedia content to said second terminal triggers the step of obtaining said at least one second item of certification data.

10. Method according to any one of Claims 1 to 5, wherein the result of a comparison of said at least one uncertified identifier with said at least one first item of certification data triggers the obtainment of said at least one second item of certification data.

11. Device for determining spoofing of at least one uncertified identifier, said at least one uncertified identifier being intended for the use of a communication means, during communication on said communication means between a first and at least one second terminal, the device comprising:
- a communication module (COM) for receiving and/or transmitting a signalling message of the communication from said first terminal and intended for said at least one second terminal, said message comprising said at least one uncertified identifier and at least one first item of certification data,
- an obtainment module (OBT) for obtaining at least one second item of certification data associated with said at least one uncertified identifier,
- a comparison module (COMP) for comparing said at least one first item of certification data with said at least one second item of certification data,
such that the establishment of a positive result by the comparison module triggers the transmission of said signalling message by the communication module.

12. System comprising a device for determining spoofing of at least one uncertified identifier according to Claim 11 and a storage device comprising means for storing said at least one uncertified identifier and said at least one second item of certification data associated with said at least one uncertified identifier.

13. System according to Claim 12, furthermore comprising means for filling in said at least one second item of certification data in said storage device via a human-machine interface.

14. Server comprising a device for determining spoofing of at least one uncertified identifier according to Claim 11.

15. Gateway comprising a device for determining spoofing of at least one uncertified identifier according to Claim 11.

16. Terminal comprising a device for determining spoofing of at least one uncertified identifier according to Claim 11.

17. Computer program comprising instructions for implementing the method according to any one of Claims 1 to 10 when the program is executed by a processor.
